# EUROPÄISCHE PATENTSCHRIFT

(11) **EP 1 005 407 B1**
(45) Veröffentlichungstag und Bekanntmachung des Hinweises auf die Patenterteilung: **24.04.2002**
(21) Anmeldenummer: 98938504.2
(22) Anmeldetag: 19.08.1998
(51) Int. Cl.: B29B 7/74

(54) **VERFAHREN ZUR HERSTELLUNG VON ÜBERWIEGEND ANORGANISCHEN SCHÄUMEN AUF ORTSFESTEN ANLAGEN UND DAFÜR BENÖTIGTE ANLAGEN**
METHOD FOR PRODUCING SUBSTANTIALLY INORGANIC FOAMS ON FIXED INSTALLATIONS, AND CORRESPONDING INSTALLATIONS
PROCEDE POUR PRODUIRE DES MOUSSES ESSENTIELLEMENT INORGANIQUES SUR DES INSTALLATIONS FIXES, ET INSTALLATIONS CORRESPONDANTES

(30) Priorität: 22.08.1997 AT 197
(43) Veröffentlichungstag der Anmeldung: 07.06.2000
(73) Patentinhaber: MELCHER, Gerhard, A-1100 Wien 10 (AT)
(72) Erfinder: MELCHER, Gerhard, A-1100 Wien 10 (AT)
(86) Internationale Anmeldenummer: AT9800196
(87) Internationale Veröffentlichungsnummer: WO9910151

(56) Entgegenhaltungen:
- EP-A- 0 686 470
- AT-B- 400 830
- US-A- 3 880 559
- US-A- 4 162 128
- US-A- 4 568 003
- US-A- 5 587 182

## Beschreibung

### Stand der Technik

Die Herstellung von anorganischen Schäumen auf Phosphatbasis ist in AF-B-400 830 beschrieben. Die Fertigung der geschäumten Massen geschieht durch das Mischen von zwei überwiegend anorganischen wäßrigen Komponenten, welche unter Gasentwicklung mit einstellbaren Topfzeiten reagieren und aushärten und so ein festes Schaumgerüst bilden. Während anorganische Schäume als Porenbeton oder als Gipsschaum in großen Mengen hergestellt werden, ist die großtechnische Produktion von solchen Schäumen auf Phosphatbasis bislang nicht bekannt. Für Anwendungen zu Brandschutzzwecken und als Isoliermaterial, beispielsweise als Dämmstoff zur Wärmedämmung, Kälteisolierung oder für Hochtemperatureinsätze werden jedoch große Mengen geschäumter Plattenmaterialien und Formteile gebraucht, die entsprechende Anlagen benötigen und die bevorzugt kontinuierlich und wenn möglich vollautomatisch herstellbar sein sollen.

Aus der deutschen Patentanmeldung DE-A-31 43 298 ist ein Verfahren zur Herstellung eines anorganischen Schaumstoffes mit Hilfe einer Monoaluminiumphosphat enthaltenden Lösung, einem tertiären Metallphosphat und einem Blähmittel bekannt, wobei das Zusammenmischen der Komponenten in einem Reaktionsgefäß erfolgt und das aufschäumende Gemisch anschließend in eine Form gefüllt wird. Ein derartiger Prozeß ist nur mit einem langsam reagierenden Einkomponentensystem möglich. Rasch reagierende Komponenten reagieren und schäumen bereits innerhalb der Mischeinrichtung derart stark, daß ein ordnungsgemäßer Austrag der Mischung beispielsweise in eine Form nicht möglich wäre.

Desweiteren ist aus der EP-A-54 874 ein Verfahren zur Herstellung eines phosphathaltigen anorganischen Schaumstoffes aus Zement, Phosphorsäure und einem Blähmittel bekannt. Hierbei wird aus Portlandzement und einem im sauren Milieu wirksamen Blähmittel durch intensives Vermischen eine Mischung mit einem vorgegebenen Äquivalentverhältnis hergestellt und das aufschäumende Gemisch wird in eine Form gefüllt, damit es nach Abklingen der exothermen Reaktion unter Hitzeeinwirkung aushärtet. Auch hier handelt es sich um ein langsames Einkomponentensystem, bei welchem die Mischung in einem geeigneten Reaktionsbehälter hergestellt wird. Nach einem derartigen Verfahren können aus schnellreagierenden Komponenten beorzugt plattenförmige Formkörper nicht ohne weiteres hergestellt werden.

### Beschreibung der Erfindung

Die Erfindung stellt sich daher die Aufgabe, technische Verfahren zur Herstellung großen Mengen an Platten und Formteilen, bevorzugt kontinuierlich hergestellt, aus anorganischen Leichtmaterialien mit Dichten im Bereich von 0,04 g/cm³ bis 0,95 g/cm³ und die dafür benötigten bevorzugt ortsfesten Vorrichtungen oder Anlagen zu beschreiben.

Die Lösung dieser Aufgabe erfolgt für das Verfahren gemäß den im Patentanspruch 1 und für die Vorrichtung gemäß den im Patentanspruch 9 angegebenen Merkmalen.

Mit dem erfindungsgemäßen Verfahren kann eine zumindest überwiegend anorganische geschäumte Masse durch rasche Vermischung einer ersten Komponente (A) und einer zweiten Komponente (B) hergestellt werden. Die erste Komponente (A) enthält eine saure wäßrige Lösung von überwiegend mehrwertigen, bevorzugt zwei oder dreiwertigen Kationen und Phosphorsäure zur Bildung eines Phosphates, wobei jeweils im Mittel 0,8 bis 1,75 Protonen der dreibasigen Phosphorsäuremoleküle durch die Kationen neutralisiert sind, in welcher Lösung ein oder mehrere Arten eines körnigen, plättchen- oder pulverförmigen Füllstoffes fein verteilt sind, wobei eine Raumtemperatur-Viskosität im Bereich von 2 000 mPa.s bis 80 000 mPa.s, bevorzugt aber im Bereich von 6 500 mPa.s bis 60 000 mPa.s, vorteilhaft durch Wahl von Art, Konsistenz und/oder Menge des Füllstoffes und/oder ihres Wassergehaltes eingestellt wird. Die zweite Komponente (B) enthält ein Oxid, Hydroxid oder ein mehrwertiges Salz einer schwachen Säure als Härter und weiters ein gegebenenfalls teilweise auch als Härter wirkendes Treibmittel, wie ein Carbonat, das unter Härtungsbedingungen ein Gas, bevorzugt CO₂, entwickelt, wobei die Komponente (B) bevorzugt angeteigt oder als wässrige Suspension vorliegt und wobei, vorteilhaft durch Wahl von Art, Konsistenz und/oder Menge des Treibmittels die Dauer des Gasentwicklungsprozesses (Steigzeit) im Bereich von 3 s bis 10 min, bevorzugt aber im Bereich von 5 s bis 5 min, und der längerdauernde Abbindeprozeß (Abbindezeit), vorteilhaft durch Wahl von Art, Konsistenz und/oder Menge der härtenden Substanzen im Bereich von 10s bis 60 min, bevorzugt aber im Bereich von 20 s bis 10 min, eingestellt wird. Nach dem Einbringen der Mischung aus den Komponenten (A) und (B) in einen Raum oder auf eine Unterlage findet das Schäumen und Abbinden der gemischten Masse statt.

Mobile Herstellverfahren und Anlagen sind in der gleichzeitig eingereichten Patentanmeldung "Verfahren zur mobilen Herstellung von überwiegende anorganischen Schäumen und entsprechende mobile Geräte" beschrieben.

Die Erfindung wird anhand der Zeichnung näher erläutert, in welcher die prinzipiellen Bauelemente einer derartigen bevorzugt kontinuierlichen Produktionsanlage dargestellt sind. Figur 1 zeigt eine kontinuierliche Anlage, welche ein oder mehrerere umlaufende Bänder aufweist, während Figur 2 den Teil einer Anlage zeigt, in welcher die Bänder durch unterteilte, aneinander anschließende Unterlagen und Abdeckungen ersetzt sind. Figur 3 zeigt den Teil einer Anlage für die chargenweise Befüllung von Formen. Derartige Anlagen gestatten somit auch eine diskontinuierliche Fahrweise und Formteilproduktion.

Diese Schäume werden aus mindestens zwei Komponenten durch intensives Mischen hergestellt, wobei die Aushärtung und Verfestigung des Schaumgerüstes innerhalb von 10 s bis 60 min, in vorteilhafter Weise zwischen 10 s und 10 min, bevorzugt zwischen 20 s und 5 min erfolgt.

Aus den Lagerbehältern (1), welche für die festen und flüssigen Rohmaterialien vorgesehen sind, wird in einer Verfahrensalternative kontinuierlich Material durch Dosiereinrichtungen, wie beispielsweise Pumpen, Schnecken (2), entnommen und einer kontinuierlich arbeitenden Rohstoffmischeinrichtung (3) zur Herstellung der Komponenten zugeführt. In dieser kontinuierlichen Rohstoffmischeinrichtung (3) erfolgt eine intensive Homogenisierung der Rohstoffe zu einer flüssigen dosierbaren Komponente. In einer zweiten Verfahrensalternative geschieht die Komponentenherstellung diskontinuierlich in zwei oder mehreren Mischbehältern (5), in welche die vorgesehenen Rohstoffmengen ebenfalls mit Hilfe von Rohstoffdosiervorrichtungen (4), beispielsweise Waagen, Pumpen, etc. eingebracht werden und eine Homogenisierung in dem Mischbehälter (5), beispielsweise mit Hilfe von Dispergierscheiben, erfolgt. Da es günstig ist den Wassergehalt so niedrig als möglich zu halten, um spätere Trocknungenergie zu sparen, sind die Viskositäten der Komponenten so hoch als möglich einzustellen. Man bewegt sich hier in einem Rahmen von 2 000 bis 80 000 mPa.s, bevorzugt 6 500 bis 30 000 mPa.s.

Die beiden Komponenten A und B werden mit Hilfe von Komponentendosiereinrichtungen (6) zur Komponentenmischvorrichtung (7) gefördert, in welcher die beiden Komponenten rasch homogen gemischt werden. Da eine genaue Einhaltung der Mengenströme wichtig ist, können als Dosiereinrichtungen, wie in der gleichzeitig eingereichten Patentanmeldung "Verfahren zur mobilen Herstellung von überwiegend anorganischen Schäumen und entsprechende mobile Geräte" beschrieben, beispielsweise Auspreßbehälter Verwendung finden, in welchen mit Hilfe von schwimmenden Kolben, die durch ein Druckmedium bewegt werden oder mechanisch gesteuerte Kolben, die in großen Zeiträumen kontinuierliche Auspressung der Komponenten erfolgt, sodaß eine ausreichende konstante Förderung der Komponenten zur Komponentenmischvorrichtung (7) gewährleistet ist. Gegebenenfalls sind Pumpen zur Förderung der Komponenten in bevorzugter Weise in Verbindung mit Steuerungsgeräten zur Regelung des Mengenflusses unter Berücksichtigung (Konstanthaltung) der Faktoren die die Pumpenförderung beeinflussen können, beispielsweise durch Temperaturänderungen bedingte Viskositätsschwankungen oder schwankenden Gegendruck in der Förderleitung und Mischkammer, eine weitere Möglichkeit. Anschließend an die Vorrichtungen, welche eine konstante Förderung der Komponenten gewährleisten, können eine oder beide Komponenten durch Vorwärmeinrichtungen vorgewärmt werden, um eine Viskositätserniedrigung und Reaktionsbeschleunigung bei der Schaumverfestigung zu erzielen.

Die Komponentenmischvorrichtung (7) kann ein statischer Mischer sein oder eine Kammer, in welche beide Komponenten eingeleitet werden und in welcher sich ein rasch drehendes Mischwerkzeug befindet. Eine oder mehrere Komponentenmischvorrichtungen (7) können vorgesehen sein. Sie können entweder feststehend oder oszillierend über die Bandbreite angeordnet sein, sodaß eine gleichmäßige Aufteilung der Komponentenmischung über die Breite der Auftragsfläche erzeilt wird. Es ist weiters vorteilhaft für die Komponentenmischvorrichtungen (7) rasche Wechseleinrichtungen und Reinigungsmöglichkeiten vorzusehen, um einen störungsfreien Betrieb zu gewährleisten. Dies kann etwa dadurch vorgesehen werden, daß sich mehrere Komponentenmischvorrichtungen (7) auf einem Revolver befinden und die verschmutzten Komponentenmischvorrichtungen (7) rasch durch Einleiten von Druckwasser und Ausblasen mit Preßluft gereinigt werden können.

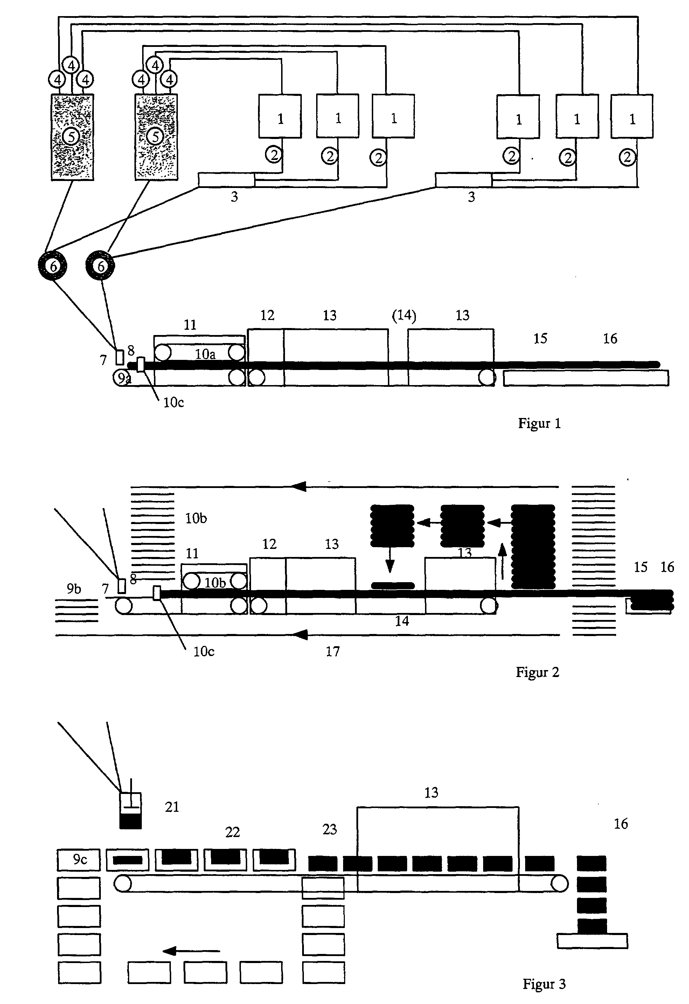

Für Formteile mit Füllmengen im Bereich von 5 kg, 10 kg oder maximal 20 kg, welche durch intensives Mischen in kurzen Zeiten, unter 5 bis maximal 10 Sekunden homogenisiert werden können, ist es möglich beide Komponenten kurz in einen entsprechenden Behälter einzutragen (21), sofort zu homogenisieren und die Mischung gleich in die Form, beispielsweise durch Kippen des Behälters, einzubringen. Eine derartige Anlage ist in Figur 3 dargestellt.

Der Auftrag der aus beiden Komponenten gemischten Masse, welche innerhalb von Sekunden zu schäumen beginnt, erfolgt auf eine Unterlage (9a, 9b) oder in eine Form (9c). Diese Unterlage kann als Band (9a) oder als begrenzte unterteilte Flächen (9b) ausgeführt sein. Derartige begrenzte Unterlagsflächen (9b) können auf Rädern fahrbar, zum Beispiel als Wageneinheiten oder als auf Rollen bewegbaren Platten ausgeführt sein, welche in einem Kreislauf wieder zum Produktauftrag zurückgeführt werden (17). Die Unterlagsfläche kann eine geschlossene Fläche oder perforiert oder in anderer Form wasserdampfdurchlässig sein, sodaß auch durch die Unterlagsfläche während des Trocknungsprozesses eine Wasserdampfabgabe erfolgen kann. Man hat jedoch zu beachten, daß im Prozeß des Komponentenmischungsauftrages auf die Unterlagsfläche (9a, 9b) eine für den Schaum undurchlässige Schicht oder Anordnung ausgewählt wird. Analog wird mit zu füllenden Formen verfahren (Fig. 3). Nach dem Füllen der Formen (9c) durch die im Mischbehälter (21) hergestellte Masse wird nach einer Schäum- und Aushärtezone (22) der Masse entformt (23). Die Formen gehen zur Füllstation im Kreislauf zurück und können dabei einem Reinigungsprozeß unterworfen werden. Die Formteile durchlaufen einen Trocknungsofen (13) und werden anschließend gestapelt (16).

Es ist weiters möglich bei diesem Prozeß Verstärkungsmaterialien, wie Netze und/oder Vliese auf einer Seite oder beidseitig, mitlaufen zu lassen oder etwa zusätzliche Fasermaterialien auf die Unterlage oder auf den aufgehenden Schaum zu streuen. Es ist jedoch wichtig hier Materialien zu verwenden, welche entweder vollständig oder zumindest teilweise in den Schaum eingebaut werden.

Erfolgt der Auftrag auf einer wasserdampfundurchlässigen Unterlage, etwa in Form eines Bandes, so kann es vorteilhaft sein, eine Übergabe des Schaumes von diesem Band auf eine für einen anschließenden Trocknungsprozeß günstigere Unterlagsfläche durchzuführen.

Um einen bevorzugt plattenförmigen Formteil mit definierten Oberflächen herzustellen, ist es notwendig Abdeckvorrichtungen (10a, 10b) vorzusehen. Diese Abdeckvorrichtung kann als kontinuierlich mitlaufendes Band (10a) oder in Form begrenzter aneinander anschließender Flächen (10b) ausgebildet werden.

Beide Flächen, Unterlagsfläche (9a, 9b) und Abdeckfläche (10a, 10b), definieren im Zusammenhang mit mitlaufenden Seitenbegrenzungsvorrichtungen (10c), welche auf dem Leichtmaterial beispielsweise, wie im Falle von Papierstreifen, auch während des Trocknungsprozesses kleben bleiben können, den Querschnitt des Formkörpers. Es ist dadurch möglich zusätzlich zur Treibmittelmenge, welche die Materialdichte bestimmt, auch die Dichte durch die auf die Unterlage pro Zeiteinheit aufgetragene Materialmenge in Zusammenhang mit der Unterlagsgeschwindigkeit bei gegebenen Formteilquerschnitt zu beeinflussen.

Das Aufgehen und Verfestigen des Schaumes erfolgt zwischen Unterlage (9a, 9b) und Abdekkeinrichtung (10a, 10b) in einer Kalibrierzone (11), anschließend an diese Zone kann es vorteilhaft sein eine weitere Aushärte- und Verfestigungszone (12) anzuschließen, in welcher das Leichtmaterial durch ein Halten auf erhöhter Temperatur von 40 °C bis 90 °C, bevorzugt 60 °C bis 80 °C, sich weiter verfestigt.

Anschließend an diese Zone ist es möglich, entweder wieder neues schäumendes Material aufzutragen und Formteile mit sehr hohen Dicken herzustellen, oder in einen Trocknungskanal (13) einzufahren. Hier ist es vorteilhaft die Abdeckvorrichtung (10a, 10b) bereits nach der Verfestigung des Schaumes entweder von der Formteiloberfläche abzuziehen oder wenn dadurch die Trocknung nur gering beeinflußt wird, weiter auf der Formteiloberfläche zu belassen, um ein Verwerfen des geschäumten Formteiles während des Trocknungsprozesses zu vermeiden. Die Abdeck- (10a, 10b) und Trägervorrichtungen (9a, 9b) müssen dampfdurchlässig sein oder zumindest eine Trocknung von einer Seite ermöglichen und dürfen durch den Trocknungsprozeß, der beispielsweise mit Hilfe von Microwellenenergie erfolgen kann, nicht angegriffen werden. Zur Vermeidung von Randrissen durch den Trocknungsprozeß der Seitenflächen ist es günstig Randstreifen, beispielsweise Papierstreifen welche kleben bleiben und eine starke Randtrocknung verhindern, zu verwenden.

Die Trocknungskanäle (13) müssen einen geregelten Ausdampfprozess ermöglichen, der eine Zerstörung des Leichtmateriales durch zu hohen Dampfdruck verhindert. Dieser Prozeß kann kontinuierlich in einer Stufe erfolgen, es kann aber auch in vorteilhafter Weise nützlich sein, zwischen einzelnen Erwärmprozessen dem Leichtmaterial genügend Zeit für ein entsprechendes Ausdampfen in Zwischenstationen (14) zu geben, um ein Zerplatzen des Schaumes zu verhindern. Die Energieeinbringung zur Erwärmung kann insbesondere in den ersten Trocknungsphasen bevorzugt durch Microwellenenergie oder Hochfrequenzenergie erfolgen, wobei anschließend Heißluft oder Strahlungsenergie zur weiteren Temperaturerhöhung in einen Bereich von 150 bis 300 °C verwendet werden kann.

Die Trocknungsprozesse erfolgen daher bevorzugt in Stufen (13,14,13), wobei die erste Stufe eine Entfernung des freien Wassers aus den Platten ist, während in einer zweiten Stufe wenn nötig eine weitere thermische Aushärtung und Abbindung erfolg. Die Abdeckvorrichtung kann nach einer gewissen Trocknung des Formteils, etwa nachdem 20%, bevorzugt 15% oder 10% Wassergehalt unterschritten wurden, abgezogen werden, sodaß es durch den weiteren Trocknungsprozeß zu keiner anschließenden Verformung des Formteils mehr kommt.

Nach entsprechender Trocknung und Verfestigung des Formteils kann eine Besäumung und ein Zuschneideprozeß (15) in bestimmte Formate erfolgen, an welchen sich eine Abstapelung (16) der Formteile anschließt.

Es ist aber auch möglich, vor allem bei der Herstellung von Platten oder anderen speziellen Formteilen, deren Oberfläche vor und nach deren Trocknung zu beschichten, zu lackieren, mechanisch durch nachträgliche formgebende Maßnahmen, beispielsweise durch Fräsen, oder in irgend einer anderen Art und Weise zu verändern. Dadurch können in einem Arbeitsgang vor allem die physikalischen und dekorativen Eigenschaften der Formkörper weiter verändert werden. Es kann vorteilhaft sein, im Falle daß Beschichtungen aufgebracht wurden, diese einem eigenen Trocknungsprozeß zu unterwerfen und entsprechende online-Anlagen dafür vorzusehen.

In bevorzugter Art und Weise werden Platten der Dicke 5 mm bis 50 mm bevorzugt 30 mm mit den Dichten zwischen 0,2 g/cm³ und 0,7 g/cm³ oder Leichtmaterialien der Dicke 50 mm bis 250 mm der Dichte 0,04 g/cm³ bis 0,20 g/cm³ hergestellt.

Kontinuierliche Anlagen zur Herstellung anorganischen Plattenmaterials sind von der Gipsplattenherstellung bekannt. Jedoch wird dort in der Regel ein Gipsbrei mit einem vorgefertigten Tensidschaum zu einer entsprechenden Gipsmasse verrührt, welche dann durch geeignete Vorrichtungen in entsprechender Dicke auf ein Trägerband in den meisten Fällen auf eine Papierbahn aufgestrichen wird, wobei dann im Vergleich zu dem hier beschriebenen Verfahren ein relativ langsamer Abbindeprozeß eintritt. Eine Vorrichtung, welche eine rasche intensive maximal einige Sekunden dauernde Durchmischung von zwei oder mehr Komponenten direkt über der Unterlagsfläche durchführt, ist bei Gipsschäumen und Gipsplatten nicht zielführend, ja würde sogar zu einem Zerschlagen des Tensidschaumes führen. Dies ist jedoch bei dem hier beschriebenen Prozeß notwendig. Der Schäumprozeß und Aushärtungsprozeß startet sehr rasch und eine Verformung oder ein Fließen der feuchten Masse, wie es bei Gips der Fall ist, ist hier bereits in der Regel nach 10 bis 30 Sekunden nur unter dauerhafter Schädigung des Schaumgerüstes möglich. Man hat daher für eine sofortige Aufgabe der durchmischten Komponenten auf die Unterlage zu sorgen und tunlichst Rohrleitungen oder ähnliche Vorrichtungen, welche ein Anlegen und Aushärten der Masse erlauben würden, zu vermeiden. Es empfehlen sich daher oszillierende Komponentenmischkammern, mit Rühr- oder Durchmischungszeiten von weniger als einer Sekunde, oder entsprechend dimensionierte diskontinuierliche Mischbehälter (21), die eine Homogenisierung der Komponenten binnen Sekunden gewährleisten, aus welchen die gemischten Komponenten sofort auf die Unterlage aufgetragen werden.

Die Anlage unterscheidet sich daher in dem entscheidenden Punkt des Materialauftrages wesentlich von Gipsplattenanlagen. Weitere Unterschiede sind jedoch auch im Trocknungs- und Aushärtungsprozeß gegeben. So läuft eine chemische Bindung rascher ab, als eine hydraulische Aushärtung und man hat anschließend das Wasser in der Regel fast vollständig gegebenenfalls aus einem gut isolierenden Dämmstoff entsprechender Dicke zu entfernen, während der Gips das Wasser zur Abbindung benötigt. In der Folge sind die Anforderungen an einen Trocknungsprozeß von Platten der Dichte 0,10 g/cm³ in einer Dicke von 100 mm und mehr, sehr von denjenigen von Gipsplatten und damit auch die benötigten Trocknerkanäle verschieden.

## Patentansprüche

1. Verfahren zur Herstellung von bevorzugt plattenförmigen Formkörpern aus überwiegend anorganischem Schaum, insbesondere auf Phosphatbasis aus mindestens zwei wäßrigen, überwiegend anorganischen Komponenten hergestellt, die sich in gemischter Form bei Raumtemperatur innerhalb einer Zeit von 10 Sekunden bis 60 Minuten verfestigen,
**dadurch gekennzeichnet, daß** die Komponenten aus Vorratsbehältern (5) angeliefert oder in einer kontinuierlich arbeitenden Rohstoffmischeinrichtung (3) hergestellt werden und von diesen dosiert einer oder mehreren Komponentenmischvorrichtungen (7) kontinuierlich zugeführt werden, daß nach einer kurzen Mischzeit von maximal 10 Sekunden in einem weiteren Verfahrensschritt die derart hergestellte Mischung der beiden Komponenten in vorgebbarer Dicke auf eine Unterlage (9a, 9b) oder in einer vorgebbaren Menge in eine Form (9c) gebracht wird und daß schließlich der derart aus der Mischung hergestellte, geschäumte und gefestigte Formkörper einem Trocknungsprozeß unterworfen wird.

2. Verfahren nach Anspruch 1, **dadurch gekennzeichnet, daß** die Verfestigung des geschäumten Formkörpers innerhalb einer Zeit von 10 s bis 10 min, bevorzugt zwischen 20s bis 5 min durchgeführt wird.

3. Verfahren nach Anspruch 1, **dadurch gekennzeichnet, daß** die Unterlage (9a, 9b) oder Form (9c) bezüglich der Komponentenmischvorrichtung (7) bewegt wird, oder daß die Komponentenmischvorrichtung (7) bewegt wird und die Unterlage (9a, 9b) entweder bewegt oder ruhend ist.

4. Verfahren nach einem der Ansprüche 1 bis 3, **dadurch gekennzeichnet, daß** die Regulierung der Formkörperdicke durch eine entsprechende Abdeckvorrichtung (10a, 10b), beispielsweise ein mitlaufendes Band (10a), durchgeführt wird und daß die Abdeckvorrichtung zumindest während der Verfestigung des Schaumes und entweder während des ganzen oder nur eines Teiles des Trocknungsprozesses vorhanden ist, wobei eine Aufteilung der Formteile in Teile bereits im Gießprozeß oder nach der Aushärtung und/oder Trocknung in Form des festen Materiales durchgeführt wird.

5. Verfahren nach einem der Ansprüche 1 bis 4, **dadurch gekennzeichnet, daß** der Schaum nach der Erstarrung in der Kalibrierzone (11) zur Beschleunigung seiner Verfestigung einer Aushärtezone mit erhöhter Temperatur (12), zwischen 40 °C und 90 °C, zugeführt wird und anschließend der feste Schaum auf eine für den Trocknungsprozeß geeignete Unterlage übergeben wird, wobei der Trocknungsprozeß unter Verwendung einer Abdeckvorrichtung (10a, 10b) durchgeführt wird und diese Abdeckvorrichtung so lange beibehalten wird, bis der Wassergehalt auf 20 bis 15 Gewichtsprozent, 15 bis 10 oder 10 bis 5 Gewichtsprozent, reduziert ist, wobei die Erwärmung und Trocknung in einem Trocknungskanal (13) erfolgt, der durch Mikrowelle oder Hochfrequenz beheizt ist, und eine weitere Trocknung des Schaumes auf geeigneten Stellplätzen in Zwischenstationen (14) erfolgt, wobei die Trocknungsvorgänge in vorteilhafter Weise mehrmals wiederholt werden können.

6. Verfahren nach Anspruch 1 bis 5, **dadurch gekennzeichnet, daß** entweder auf einer, zwei oder mehreren Formteilseiten Verstärkungsmaterialien, wie Gitter, Netze, Vliese, oder Fasermaterialien, welche auf die Unterlage und/oder den aufgehenden Schaum aufgebracht werden, welche entweder vollständig oder teilweise vom Schaum durchdrungen werden, Verwendung finden.

7. Verfahren nach Anspruch 1 bis 6, **dadurch gekennzeichnet, daß** die Komponenten mit Viskositäten von 2.000 bis 80.000 mPa.s, bevorzugt 6.500 bis 30.000 mPa.s angeliefert oder hergestellt werden und/oder daß eine oder beide Komponenten mit erhöhter Temperatur zur Viskositätserniedrigung und/oder Reaktionsbeschleunigung eingesetzt werden.

8. Verfahren nach einem der Ansprüche 1 bis 7, **dadurch gekennzeichnet, daß** die Homogenisierung der Komponenten chargenweise innerhalb von maximal 10 Sekunden, bevorzugt 5 Sekunden, in Mischbehältern erfolgt und sofort die gemischte Masse direkt auf die Unterlage (9a, 9b) oder in eine Form (9c) gebracht wird.

9. Vorrichtung zur Durchführung des Verfahrens nach einem der Ansprüche 1 bis 8, enthaltend mindestens zwei getrennte Komponentenbehälter (5), die Füllvorrichtungen und Entnahmevorrichtungen besitzen, oder kontinuierlich arbeitende Rohstoffmischeinrichtungen (3), wobei durch die Entnahmerohrleitungen die Komponenten getrennt zu Komponentendosiervorrichtungen (6) geführt werden und von diesen Komponentendosiervorrichtungen (6) die Zuleitung zur Komponentenmischvorrichtung (7) der Komponenten durch Rohrleitungen erfolgt, **dadurch gekennzeichnet, daß** die Komponentenmischvorrichtung (7), in der eine intensive kontinuierliche Durchmischung der Komponenten erfolgt, sich direkt über einer Unterlage befindet, wobei Komponentenmischvorrichtung (7) und Unterlage (9a, 9b) Relativbewegungen zueinander ausführen und die Unterlage (9a, 9b), entweder als Band (9a) oder als unterteilte Fläche (9b) in Kombination mit seitlich mitlaufenden Begrenzungsbändern (10c), beispielsweise Papierbahnen, ausgeführt ist und eine entweder als Band (10a) oder als unterteilte Fläche (10b) ausgebildete den aufgehenden Schaum begrenzende Abdeckvorrichtung vorhanden ist, oder daß die Unterlage als unterteilte Unterlagsvorrichtungen (9c), beispielsweise als Formen (9c), ausgeführt sind und anschließende Trocknungsvorrichtungen (13) vorhanden sind.

10. Vorrichtung nach Anspruch 9, **dadurch gekennzeichnet, daß** nach einer Kalibrierzone (11) des Schaumes in vorteilhafter Weise eine beheizte oder isolierte Aushärtezone (12) angeordnet ist, an welche ein oder mehrere Trocknungskanäle (13), auf Microwellen- oder Hochfrequenzbasis, und Zwischenstationen in Form von Stellplätzen (14), die ein Trocknen und Ausdampfen des Schaumes erlauben, angeschlossen ist, wobei durch Kreisläufe ein mehrmaliges Durchlaufen einer Trocknungsvorrichtung (13) erreicht werden kann und nachfolgend eine Besäumungsvorrichtung (15) und Abstapelungsvorrichtung (16) vorgesehen ist.

11. Vorrichtung nach einem der Ansprüche 9 und 10, **dadurch gekennzeichnet, daß** Vorrichtungen vorgesehen sind, welche das Einbringen von Geweben, Netzen, Vliesen, etc. und/oder das Einstreuen von Fasermaterialien auf die Unterlage (9a, 9b) oder in die Form (9c) und/oder auf den aufgehenden Schaum gestatten.

## Claims

1. Process for the preparation of moulded parts preferably in the shape of sheets consisting of mainly inorganic foam, especially on the basis of phosphate, prepared from at least two aqueous mainly inorganic components, which get solid in mixed form at room temperature within a time of 10 seconds to 60 minutes, **characterised in that** the components are delivered from storage bins (5) or made in continuously working raw material mixing installations (3) and from these in continuously measured quantities sent to one or more component mixing installations (7), that after a short mixing time of maximum 10 seconds in a next process step the thus produced mixture of the two components is applied in a predetermined thickness on a supporting surface (9a, 9b) or in a predetermined quantity into a mould (9c) and that finally the thus out of this mixture produced, foamed and hardened, moulded part is exposed to a drying process.

2. Process according to Claim 1, **characterised in that** the solidification of the foamed moulded part is performed within a time of 10 s to 10 min, preferably between 20 s and 5 min.

3. Process according to Claim 1, **characterised in that** the supporting surface (9a, 9b) or mould (9c) is moved in regard to the mixing equipment of the components (7), or that the mixing equipment of the components (7) is moved and the supporting surface (9a, 9b) is either in motion or at rest.

4. Process according to one of the Claims 1 to 3, **characterised in that** the regulation of the thickness of the moulded part is made by a corresponding cover equipment (10a, 10b), for example a belt which runs along (10a), and that the cover equipment is present at least during the process of solidification, and during the whole or at least a part of the drying process, whereby a partition of the moulded part can already be made during the casting process or after the curing and/or drying in the form of the solid material.

5. Process according to one of the Claims 1 to 4, **characterised in that** the foam after getting rigid in the zone of calibration (11) is brought to accelerate its solidification to a zone of curing with increased temperature (12), between 40 °C and 90 °C, and subsequently the solid foam is applied to a supporting surface suitable for a drying process, whereby the drying process is made by using a cover equipment (10a, 10b) and this cover equipment is kept until the water content is reduced to 20 to 15 weight percent, 15 to 10 or 10 to 5 weight percent, whereby the heating and drying is performed in a drying channel (13), which is heated by microwave or high frequency arid a further drying of the foam occurs in suitable resting-places in intermittent stations (14), whereby advantagously the drying processes can be repeated several times.

6. Process according to one of the Claims 1 to 5, **characterised in that** either on one, two or more sides of the moulded part reinforcing materials, like lattices, nets, fleece, or fiber materials are used, which are applied on the supporting surface and/or the rising foam, which are either completely or partly penetrated by the foam.

7. Process according to one of the Claims 1 to 6, **characterised in that** the components are delivered or produced with viscosities of 2.000 to 80.000 mPa.s, preferably 6.500 to 30.000 mPa.s, and/or that one or both components are used with elevated temperature to reduce the viscosity and/or to increase the reactivity.

8. Process according to one of the Claims 1 to 7, **characterised in that** the homogenisation of the components is made batchwise within a maximum of 10 seconds, preferably 5 seconds, in mixing vessels and immediately the mixed mass is brought directly on a supporting surface (9a, 9b) or into a mould (9c).

9. Device for implementing the process according to one of the Claims 1 to 8, containing at least two separate storage bins for the components (5), which have filling devices and removing devices, or continuously working raw material mixing installations (3), where the components are brought by delivery pipes separately to the metering devices for the components (6) and of these metering devices for the components (6) the supply line to the mixing installation of the components (7) is made by tubings, **characterised in that** the mixing installation of the component (7), in which an intensive continuous mixing of the components occurs, is directly above a supporting surface, where the mixing installation of the components (7) and the supporting surface (9a, 9b) are in relative motion to one another and the supporting surface (9a, 9b) is constructed either as belt or as subdivided surface (9b) in combination with lateral moving boundary belts (10c), for example paper strips, and that a rising foam restricting cover equipment exists, which is designed either as belt (10a) or as subdivided surface (10b), or that the-supporting surface is made as divided supporting surface devices (9c), for example as moulds (9c), and that adjacent drying devices (13) exist.

10. Device according to Claim 9, **characterised in that** after a zone of calibration (11) of the foam in an advantageous mode a heated or isolated curing zone (12) exists, after which one or more drying channels (13), on micro wave or high frequency basis, and intermediate stations in the form of resting-places (14), which allow a drying and evaporation of the foam, are attached, whereby circulation devices allow a repeated process of passing through one drying equipment (13) and subsequently an edging equipment (15) and piling equipment (16) is provided.

11. Device according to one of the Claims 9 and 10, **characterised in that** devices exist which allow the application of nettings, nets, fleece, etc. and/or the strewing of fiber materials on the supporting surface (9a, 9b) or in the mould (9c) and/or the rising foam.

## Revendications

1. Procédé de production d'une pièce moulée préférablement en forme de plaque de mousse en majeure partie inorganique, surtout en base de phosphate fabriqué au moins de deux composantes aqueuses en majeure partie inorganique, qui se solidifient en forme melangée à temperature ambiante en une espace de temps de 10 secondes à 60 minutes, **caracterisé en ce que** les composantes sont livrées des récipients d'approvisionnements (5) ou fabriquées dans un mélangeur de matières premières (3) travaillant continuellement et qui en sont ainsi livrées continuellement en mode dosée à un ou plusieurs mélangeurs des composantes (7), et qu'apres une brève durée de temps de melange de 10 secondes au maximum dans une étape suivante du processus le melange ainsi produit de deux composantes est appliqué en épaisseur prédéterminée sur un support (9a, 9b) ou en quantité prédéterminée dans une moulée (9c) et que finalement la pièce moulée, moussée et solide, ainsi produite du mélange est soumise à un processus de déssiccation.

2. Procédé suivant la revendication 1, **caractérisé en ce que** la solidification de la pièce moulée moussée est exécutée pendant un temps de 10 s à 10 min, préférablement de 20 s à 5 min.

3. Procédé suivant la revendication 1, **caractérisé en ce que** la support (9a, 9b) ou la moule (9c) est en mouvement relatif au mélangeur des composantes (7), ou que le mélangeur des composantes (7) est en mouvement et le support (9a, 9b) est soit en mouvement soit immobile.

4. Procédé suivant l'une quelconque des revendications 1 à 3, **caractérisé en ce que** l'ajustage de l'épaisseur de la pièce moulée est exécutée par un mécanisme de couverture correspondant (10a, 10b), par exemple un ruban accompagnant (10a), et que le mécanisme de couverture est présent au moins pendant la solidification de la mousse soit pendant tout le processus soit seulement pendant une partie du processus de dessiccation, en executant deja un partage des pièces moulées dans le processus de mouler ou après le durcissement et/ou dessiccation du matériel solide.

5. Procédé suivant l'une quelconque des revendications 1 à 4, **caractérisé en ce que** la mousse est exposée après la solidification dans la zone de calibration (11) pour accélérer sa solidification à une zone de solidification de temperature élevée (12), entre 40 °C et 90 °C, et après la mousse solide est mise sur un support qui convient à un processus de dessiccation, **en ce que** le processus de dessiccation est éxécuté en se servant d'un mécanisme de couverture (10a, 10b) et que ce mécanisme de couverture est maintenu jusqu'à ce que la teneur en eau soit réduite de 20 à 15 pourcents de poids, de 15 à 10 ou de 10 à 5 pourcents de poids, l'échauffement et la dessiccation ayant lieu dans un canal de dessiccation (13), qui est chauffé par micro-ondes ou haute fréquence, et une dessiccation supplémentaire de la mousse se fait sur des places de repos convenables en stations de transitions (14), et que les processus de dessiccation peuvent avantageusement être répétés plusieurs fois.

6. Procédé suivant l'une quelconque des revendications 1 à 5, **caractérisé en ce que** les matériaux de renforcement, comme grilles, filets, etoffes nappées ou fibres matériaux sont appliqués a une, deux ou plusiers côtés de la pièce moulée, qui sont mis sur le support et/ou la mousse levant, et qui sont complètement ou partiellement pénétrés de la mousse.

7. Procédé suivant l'une quelconque des revendications 1 à 6, **caractérisé en ce que** le composantes sont livrées ou produites avec une viscosité de 2.000 à 80.000 mPa.s, préférablement de 6.500 à 30.000 mPa.s et/ou qu'une ou toutes les deux composantes sont appliquèes à temperature élevée pour reduire la viscosité et/ou accélérer la réaction.

8. Procédé suivant l'une quelconque des revendications 1 à 7, **caractérisé en ce que** la homogénéisation des composantes est fabriquée en charges pendant 10 secondes au maximum, préférablement pendant 5 secondes, dans un récipient de melangée et la masse mélangée est appliquée directement sur le support (9a, 9b) ou dans une moule (9c).

9. Appareil pour la mise en oeuvre du procédé d'une quelconque des revendications 1 à 8, contenant au moins deux récipients séparés des composantes (5), qui possèdent des installations de remplissage et de prélèvement, ou des mélangeurs de matières premières (3) qui travaillent continuellement, en transportant les composantes séparément dans une tuyauterie de remplissage aux installations de dosage des composantes (6) et de ces installations de dosage des composantes (6) la transmission aux mélangeur des composantes (7) se fait par des tuyauteries, **caractérisée en ce que** le mélangeur des composantes (7), où se produit un continuel mélange intensif des composantes, se trouve directement sur un support, et où le mélangeur des composantes (7) et le support (9a, 9b) sont en mouvement relatif l'un vers l'autre et le support (9a, 9b) est réalisé soit en forme de ruban (9a) soit en support partagé (9b) en combination avec des rubans latéraux accompagnants (10c), par exemple des rubans de papier, et un mécanisme de couverture existe qui limite la mousse levante et qui est disponible soit en ruban (10a) soit en surface partagée (10b), ou que le support est réalisé en installations de support partagées (9c), par exemple des moules (9c), et que des installations suivantés de dessiccation existent.

10. Appareil suivant la revendication 9, **caractérisé en ce qu'**après une zone de calibration (11) de mousse une zone de solidification (12) qui en mode favourable est chauffée ou isolée existe, après qui un ou plusieur canals de dessiccation (13), sur base de micro-ondes ou haute fréquence, et des stations de transitions en form de place de repos (14), qui permettent une dessiccation et évaporisation supplémentaires de la mousse, existent, et des cycles permettent le passage d'une installation de dessiccation (13) plusieurs fois et après une installation de coupage (15) et une installation d'empilage (16) sont prévues.

11. Appareil suivant l'une quelconque des revendications 9 et 10, **caractérisé en ce que** des dispositifs sont prévus qui permettent l'utilisation de grilles, filets, étoffes nappées, etc. et/ou la dispersion de matériaux fibreux sur un support (9a, 9b) ou dans une moule (9c) et/ou sur la mousse levante.
